# EUROPÄISCHE PATENTSCHRIFT

(11) **EP 1 525 264 B1**
(45) Veröffentlichungstag und Bekanntmachung des Hinweises auf die Patenterteilung: **22.03.2006**
(21) Anmeldenummer: 03794809.8
(22) Anmeldetag: 02.09.2003
(51) Int. Cl.: C08L 97/02, B27N 9/00

(54) **VERFAHREN ZUR HERSTELLUNG BRANDGESCHUETZTER HOLZFASERFORMTEILE**
METHOD FOR THE PRODUCTION OF FIRE-RESISTANT MOULDED WOOD FIBRE PIECES
PROCEDE DE FABRICATION DE PIECES USINEES EN FIBRES DE BOIS IGNIFUGEES

(30) Priorität: 06.09.2002 DE 10241242
(43) Veröffentlichungstag der Anmeldung: 27.04.2005
(73) Patentinhaber: Fraunhofer-Gesellschaft zur Förderung der angewandten Forschung e.V., 80686 München (DE)
(72) Erfinder: THOLE, Volker, 38102 Braunschweig (DE); KRUSE, Dirk, 38102 Braunschweig (DE)
(74) Vertreter: Stornebel, Kai
(86) Internationale Anmeldenummer: PCT/DE2003/002926
(87) Internationale Veröffentlichungsnummer: WO 2004/024824

(56) Entgegenhaltungen:
- WO-A-92/04169
- DE-A- 2 523 537
- DE-A- 3 302 841
- DE-A- 19 500 653
- US-A- 4 761 342

## Beschreibung

Die Erfindung betrifft ein Verfahren zur Herstellung brandgeschützter dichter Formteile aus Holzfasern oder anderen lignocellulosen Faserstoffen bzw. Partikeln.

Faserplatten aus Holz oder anderen lignocellulosehaltigen Pflanzen sind an sich bekannt. Je nach Herstellungsverfahren Nassverfahren, Halbtrockenverfahren, Trockenverfahren und Dichte werden die Faserplatten in poröse. Faserplatten, halbharte Faserplatten oder harte Faserplatten oder beim Trockenverfahren in Low-Density-Fibreboard (LDF), Medium-Density-Fibreboard (MDF) und High-Density-Fibreboard (HDF) eingeteilt. Allen Herstellungsverfahren, bei denen Holz als Rohstoff verwendet wird, ist gemeinsam, dass die erzeugten Hackschnitzel zunächst in einem thermo-mechanischen Prozess zu Fasern aufbereitet werden.

Beim Nassverfahren wird aus den Faserstoffen und Wasser eine Suspension mit einem Feststoffgehalt von 1,5 % bis 3 % hergestellt, aus der dann über eine Lang- oder Rundsiebmaschine ein Faservlies ausgebildet wird. Das Faservlies wird anschließend entwässert. Bei der Herstellung poröser Faserplatten erfolgt vor der Trocknung lediglich eine geringe Verdichtung, um eine einheitliche Plattendicke zu gewährleisten. Bei den "härteren" Faserplatten ist zur gewünschten Dichteerhöhung und Dickeneinstellung ein Heißpressvorgang erforderlich. Durch die hohe Faserfeuchte vor dem Heißpressen kann ein ausreichend fester Faserverbund ohne oder mit nur geringen Bindemittelanteilen erzeugt werden. Hydrothermale Bedingungen unter der Heißpresse bewirken eine Aktivierung holzeigener Bindestoffe.

Diese notwendigen hydrothermalen Bedingungen liegen bei der Herstellung üblicher LDF, MDF oder HDF nicht vor. Deshalb wird zur Verklebung der Fasern ein organisches Bindemittel verwendet. Um eine Agglomeratbildung zu vermeiden, wird das Bindemittel vor der Fasertrocknung direkt nach dem Faseraufschluss im Refiner in der Blow-Line zugegeben. Die Abbindezeit organischer Bindemittel ist temperaturabhängig; eine beschleunigte Erhärtung beginnt oberhalb von 60°C. Folglich ist bei der Fasertrocknung mit einer Startreaktion des Bindemittels zu rechnen. Um die hierbei eintretenden Verluste an Bindefähigkeit zu kompensieren, muss ein höherer Beleimungsgrad gewählt werden. Die beleimten und getrockneten Faserstoffe werden anschließend gestreut, vorverdichtet und in einer Heißpresse zu einer Platte verpresst.

Der unerwünschte Bindemittelverlust wird durch besondere Mischerkonfigurationen vermieden. Derartige Anlagen sind speziell für agglomeratfreie Trockenbeleimung von Faserstoffen geeignet. Um eine sichere Funktion dieser Mischer zu gewährleisten, ist eine häufige Reinigung erforderlich. Auch lässt sich nach bisherigen Erfahrungen ein vollständig agglomeratfreier Faserstoff nicht herstellen.

Ferner ist es bekannt, Faserplatten ohne Bindemittel im Trockenverfahren herzustellen. Vergleichbar zum Nassverfahren soll hierbei der Faserverbund durch die Aktivierung holzeigener Bindekräfte entstehen. Nachteilig bei diesem Verfahren ist die sehr lange Presszeit. Der wirtschaftliche Vorteil einer Bindemittelersparnis wird hierdurch mehr als aufgehoben. Auch sind die Platten sehr dunkel, was die Beschichtungsfähigkeit mit hellen Beschichtungsstoffen einschränkt. Darüber hinaus ist die hohe Dichte dieser Platten für viele Anwendungen nachteilig. Die lange Presszeit führt ferner zur teilweisen Pyrolyse des Holzes, unerwünschte Emissionen sind die Folge.

Alle Faserplatten werden unter bestimmten Voraussetzungen (Dichte > 400 kg/m³, Dicke >5 mm) ohne weitere Prüfung lediglich als normalentflammbar eingestuft.

Plattenwerkstoffe der Brandschutzklasse A2 (unbrennbar) erfordern hohe anorganische Bindemittelanteile. Diese Platten kommen als Gipsfaser-, Gipsspan-, Zementspan- oder Zementfaserplatten in den Handel. Für die Einstufung in die Brandschutzklasse A2 darf der Anteil organischer Bestandteile erfahrungsgemäß nicht höher als 20 % sein. Diese hohen Bindemittelanteile führen zu einer grundsätzlich anderen Struktur als bei den klassischen Faserplatten. Die organischen Bestandteile sind nicht miteinander verklebt, sondern sie sind in einer Matrix eingebunden. In diesem Fall handelt es sich eher um eine Bewehrung als um strukturbildende Funktionselemente. Die Abbindung dieser Bindemittel erfolgt durch Kristall- oder durch die Bildung fester Gele (Hydratation). Prozessbedingt muss bei der Herstellung immer mehr Wasser eingesetzt werden als für die Kristallbildung stöchiometrisch erforderlich. Alle Platten werden nach der Abbindung technisch getrocknet.

Auch organisch gebundene Plattenwerkstoffe der Brandschutzklassen B1 und A2 sind bekannt. Diese Eigenschaften können aber nur erreicht werden, wenn neben den brennbaren organischen Bindemitteln Flammschutzmittel bzw. Brandschutzmittel zugegeben werden.

Flammschutzmittel sind chemische Substanzen, welche entweder die Entflammbarkeit und/oder die Brennbarkeit vermindern oder die Feuerwiderstandsdauer des Werkstoffs oder des Bauteils erhöhen. Dies ist durch folgende chemische und/oder physikalische Prozesse zu erreichen:
- Reduzierung der Wärmezufuhr durch das Hinzufügen von Stoffen, die sich in einem stark endothermen Prozess zersetzen und dabei nicht brennbare Gase erzeugen, die zusätzlich die Flammen eindämmen (z.B. Aluminium, Magnesiumhydroxid). Energieverbrauchende Brandschutzmittel
- Ersticken der Flammen durch Entwicklung chemischer Substanzen, die die H- und OH-Radikale binden. Feuererstickende Brandschutzmittel
- Begrenzung des Wärmeflusses durch Schaffung einer isolierenden Schicht an der Oberfläche. Verkohlungsfördernde, sperrschicht- und dämmschichtbildende Brandschutzmittel

Brandschutzmittel werden dabei entweder als Schutzanstrich oder als Imprägnierung bzw. Zuschlagstoff (bei Holzwerkstoffen) angewendet. Im Allgemeinen werden heutige Brandschutzmittel nach mehreren dieser Prinzipien funktionieren.

Die notwendigen Zusatzmittel erhöhen zunächst die produktbezogenen Materialkosten. Ferner kommt es bei den üblichen Zusatzmitteln zu Veränderungen des pH-Werts und der alkalischen Pufferkapazität. Unerwünschte Veränderungen im Erhärtungsverhalten der organischen Bindemittel sind die Folge. Sofern eine für die gewünschte Festigkeit des Werkstoffes ausreichende Erhärtung bei den notwendigen Mengen an Zusatzmittel überhaupt noch stattfindet, sind sehr lange Presszeiten erforderlich. Dies schränkt die wirtschaftliche Herstellung derartiger Plattenwerkstoffe erheblich ein. Auch sind die besonders wirksamen Brandschutzmittel ökologisch bedenklich, da sie Halogenverbindungen enthalten. Halogenfreie Brandschutzmittel müssen auf Grund ihrer eingeschränkten Wirksamkeit in besonders hohen Dosierungen eingesetzt werden.

Neben den durch Kristallisation erhärtenden anorganischen Bindemitteln sind auch solche bekannt, die aus wasserlöslichen Kalium- oder Natriumsilicaten (Wassergläser) bestehen. Wassergläser finden in vielen Industriebereichen Anwendung. So können sie als Gastrockenmittel ebenso eingesetzt werden wie als Basis für Wasserglasfarben. Auch bei der Papierfaserherstellung, der Seifenproduktion und Bodenverfestigung werden Wassergläser als Hilfs- oder Wirkstoffe verwendet. Wassergläser zeigen auch eine Flammschutzwirkung. Im Zusammenhang mit der Herstellung von Holz- oder Faserwerkstoffen sind Verfahren bekannt, bei denen Wassergläser für die Herstellung von Dämmwerkstoffen, also Werkstoffen mit einer sehr geringen Rohdichte, eingesetzt werden. Wassergläser bilden aber eine bindende Eigenschaft zu lignocellulosehaltigen Fasern oder Partikeln nur bei Werkstoffen mit einer geringen Rohdichte aus. Nur unter diesen Bedingungen ist eine ausreichende Erhärtung und Verbundwirkung zu den Fasern möglich, da lediglich bei der für die Dämmstoffe charakteristischen hohen Porosität das Kohlendioxid der Luft für das Wasserglas zugänglich ist.

Konstruktionswerkstoffe mit hohen Festigkeiten, wie sie im Möbelbau und Bauwesen erforderlich sind, können demzufolge mit reinem wasserglas ohne zusätzliche oder anorganische Bindemittel nicht hergestellt werden. Bei dichten Werkstoffen hat das Wasserglas in diesen Fällen lediglich die Funktion eines Flammschutzmittels. Verfahren mit Wassergläsern als Flammschutzmittel und zusätzlichen Bindemitteln haben damit den gleichen Nachteil wie alle Verfahren, bei denen neben den Bindemitteln zur Brandschutzwirkung der Plattenwerkstoffe weitere Stoffe zugegeben werden müssen. Neben den erheblichen Kosten für die Zusatzmittel und dem hohen Aufwand für die Mischtechnik ist die Beeinträchtigung der Bindemittelerhärtung besonders nachteilig.

Brandgeschützte Faserwerkstoffe mit anorganischen Bindemitteln durch solche mit anorganischen Bindemitteln zu ersetzen, ist nur für wenige Einsatzbereiche zweckmäßig. Auch bei einer optimierten Zusammensetzung können die in vielen Fällen geforderten mechanischen Eigenschaften nicht eingehalten werden. Für Faserformteile im Fahrzeugbau und für Möbelteile sind sie daher nicht geeignet. Faserwerkstoffe mit anorganischen Bindemitteln haben stoffbedingt eine deutlich höhere Dichte. Die damit verbundene relativ gute Wärmeleitfähigkeit ist im Bauwesen unerwünscht, da hierdurch die notwendige Wärmedämmung dicker ausgeführt werden muss.

Die WO 92/04169 A1 beschreibt ein Trockenverfahren, bei dem auf defibrierte Fasern in einem Luftstrom sprühgetrocknetes Natriumsilikatpulver eingeblasen wird. Dies geschieht in einem Verhältnis von Silikat zu trockener Faser von 10 bis 25 zu 100 Teilen. Aus dem faser- und pulverenthaltenden Luftstrom wird ein Kuchen gebildet, der in eine Heißpresse überführt wird und dort seine endgültige Form erhält. In der Heißpresse übersteigt die Temperatur im Faserkörper nicht 130 °C - 150°C.

Der Erfindung liegt die Aufgabe zugrunde, ein Verfahren zur kostengünstigen Herstellung brandgeschützter dichter Formteile aus Holzfasern oder anderen lignocellulosen Faserstoffen bzw. Partikeln (nachfolgend "Faserstoffe") anzugeben.

Diese Aufgabe wird erfindungsgemäß dadurch gelöst, dass im Trockenverfahren den Faserstoffen bei einer Mischtemperatur von 30°C - 95°C, vorzugsweise von 40°C - 75°C auf Kalium- und/oder Natriumsilikaten basierende anorganische Stoffe (nachfolgend "Wasserglas") zugegeben werden, und bei dem aus diesem Gemisch ein Faservlies gebildet wird, das in einer Heißpresse auf eine Dichte von 350 kg/m³ - 1.250 kg/m³ verdichtet wird und im Verdichtungszustand bei geschlossener Presse und einer Temperatur oberhalb 80°C härtet. Dabei wird das Wasserglas direkt in den die Faserstoffe aufschließenden Kochprozess oder in ein Transportorgan eines Hackschnitzel für die Herstellung der Faserstoffe zertasernden Refiners eingespeist.

Beruhend auf dem gleichen Erfindungsprinzip wird die oben genannte Aufgabe auch dadurch gelöst, dass unter Wasserdampfatmosphäre den Faserstoffen bei einer Mischtemperatur von 105°C - 180°C, vorzugsweise 110°C - 150°C auf Kalium- und/oder Natriumsilikaten basierende anorganische Stoffe (nachfolgend "Wasserglas") zugegeben werden, und bei dem aus diesem Gemisch ein Faser-vlies gebildet wird, das in einer Heißpresse auf eine Dichte von 350 kg/m³ - 1.250 kg/m³ verdichtet wird und im Verdichtungszustand bei geschlossener Presse und einer Temperatur oberhalb 80°C erhärtet.

Dabei weist das zu verdichtende Faservlies eine Faserfeuchte <25 % auf. Die Verdichtung des Faservlieses in der Heißpresse erfolgt ohne Gasdurchströmung oder Zutritt von Luftkohlendioxid.

Mit dem vorstehend an erster Stelle genannten erfindungsgemäßen Verfahren kann z.B. ein brandgeschützter Faserwerkstoff mit einer für MDF üblichen Dichte von 750 kg/m³ ohne Zugabe organischer Bindemittel auch im Trockenverfahren hergestellt werden. Bei Mischen von Faserstoffen mit wasserhaltigen Bindemitteln entstehen üblicherweise Agglomerate. Ursache dieser Agglomeratbildung ist die mit zunehmender Faserfeuchte zunehmende Verfilzungsneigung der Fasern. Darüber hinaus führt die Kaltklebrigkeit (Tak) organischer Bindemittel dann zur Fixierung und dauerhaften Agglomeratbildung.

Hochviskose wasserarme Bindemittel oder pulverförmige Bindemittel tragen zwar weniger Feuchte in die Mischung ein, lassen sich aber nicht ausreichend gut verteilen. Um die Agglomeratbildung zu verhindern, wäre es daher wünschenswert, wenn bei der Trockenbeleimung das zur Verteilung notwendige Bindemittelwasser durch eine technische Trocknung zeitgleich wieder ausgetrieben werden könnte. Die hierzu notwendige Temperaturerhöhung führt bei üblichen organischen Bindemitteln zu einer unerwünschten Voraushärtung. Bei der erfindungsgemäßen Verwendung von Wasserglas kann der Mischvorgang ohne die Gefahr einer Voraushärtung bei einer höheren Tempertur erfolgen. Da Wasserglas darüber hinaus keinen ausgeprägten Tak zeigt, ist das Mischergebnis weitgehend agglomeratfrei.

Mit der erfindungsgemäßen Verwendung von Wasserglas wird auch eine effektivere Beleimung unter Wasserdampfatmosphäre möglich. Im Unterschied zu organischen Bindemitteln, bei denen bei einem Bindemitteleintrag vor der Fasertrocknung (Nassbeleimung) ein Verlust an Bindefähigkeit durch die Trocknung in Kauf genommen werden muss, tritt bei Wasserglas kein Verlust an Bindefähigkeit auf. Bei organischen Bindemitteln und einer Nassbeleimung sind möglichst hohe Feststoffgehalte in den Bindemitteln günstig. Jeder nützliche Wassereintrag erhöht die notwendige Trocknungsenergie (Trocknungstemperatur, Trocknungszeit). Da hierdurch eine stärkere Voraushärtung stattfindet, nehmen Bindefähigkeit und folglich auch die Werkstofffestigkeit ab. Eine hohe Feststoffkonzentration ist selbst dann anzustreben, wenn sich hierdurch keine optimale Bindemittelverteilung einstellt. Die weitgehende Unempfindlichkeit des Wasserglases gegen Temperatureinwirkungen ermöglicht demgegenüber eine in Bezug auf die optimale Leimverteilung frei wählbare Feststoffkonzentration.
Dabei ist es zweckmäßig, wenn zumindest ein Anteil der zuzugebenden Gesamtmenge an Wasserglas den zur Herstellung der Faserstoffe bestimmten Hackschnitzeln vor und/oder bei ihrer Zerfaserung zugegeben wird.

Besonders vorteilhaft ist das hier angegebene Verfahren mit Wasserglas bei geplanten oder ungeplanten Produktionsunterbrechungen. Die mit organischen Bindemitteln im Nassverfahren beleimten Faserstoffe sind nur begrenzt haltbar (offene Zeit). So nehmen die mechanischen Eigenschaften von Faserplatten merklich ab, wenn die Fasern nach einer Wartezeit von mehr als 2 h nach der Beleimung verpresst werden. Bei der Herstellung von Formteilen werden überwiegend zunächst Fasermatten hergestellt, die zugeschnitten und anschließend in einer Formpresse verarbeitet werden. Aus produktionstechnischen Gründen können zwischen der Matten- bzw. Vliesherstellung und der Formteilherstellung mehrere Wochen liegen. Dies ist bisher nur mit teuren phenolharzbasierenden Bindemitteln möglich. Die Zeitspanne sollte aber auch hierbei nicht mehr als 4 Wochen betragen. Bei der erfindungsgemäßen Wasserglasbeleimung wurde auch nach einer Lagerzeit von 12 Wochen keine Abnahme der mechanischen Eigenschaften festgestellt.

Erfindungsgemäß können mit der Wasserglasbeleimung Faserplatten mit einer für Konstruktionswerkstoffe erforderlichen Dichte und Festigkeit hergestellt werden, die darüber hinaus auch noch über gute brandtechnische Eigenschaften verfügen. Ein Zusatzmittel ist im Unterschied zu anderen Verfahren nicht erforderlich.

Der Binde-Flammschutzmittelanteil kann erfindungsgemäß unterschiedlich hoch sein, wobei den Faserstoffen das Wasserglas in einer Menge von 5 % - 40 %, vorzugsweise 10 % - 30 %, bezogen auf atro Faserstoffe, zugegeben wird. So ist es möglich, bei einer geringen Rohdichte von ca. 400 kg/m³ und einem Binde-Flammschutzmittelanteil von 25 % die Anforderungen der Brandschutzklasse B1 zu erfüllen. Bei höheren Rohdichten > 680 kg/m³ sind für die gleiche Brandschutzklasse Binde-Flammschutzmittelanteile < 15 % ausreichend. Werden neben den Brandeigenschaften besondere Anforderungen an die mechanischen oder hygrischen Eigenschaften gestellt, kann der Anteil des Binde-Flammschutzmittels den Anforderungen entsprechend angepasst werden. Die Brandeigenschaften und mechanischen Eigenschaften werden bei diesem Verfahren lediglich durch die Dichte und den Anteil des Binde-Flammschutzmittels bestimmt. Chemischen Wechselwirkungen zwischen einem organischen Bindemittel und einem Flammschutzmittel müssen bei dem erfindungsgemäßen Verfahren nicht berücksichtigt werden. So kann durch entsprechende Zusatzmengen eine hohe Flammschutzwirkung erreicht werden, ohne dass der Abbindemechanismus eines organischen Bindemittels beeinträchtigt wird. Die verfahrenstechnischen Parameter sind nicht von den gewünschten Eigenschaften des Werkstoffes abhängig. Das Verfahren ist daher besonders wirtschaftlich.

Erfindungsgemäß kann ein Wasserglasklebstoff verwendet werden, der dem Wasserglas zugemischte Hilfs- und Wirkstoffe, wie z.B. Füllstoffe, Pigmente, Netzmittel und dergleichen aufweist. Es ergeben sich bei Verwendung eines Wasserglasklebstoffs verbesserte Verarbeitbarkeit, gesteigerte Adhäsionseigenschaften sowie eine bessere Wasserfestigkeit.

Außerdem können dem Wasserglas zur schnelleren Erhärtung vor oder nach seiner Zugabe zu den Faserstoffen übliche Hilfs- und Wirkstoffe zugegeben werden, die vorzugsweise aus Säurebildnern, insbesondere Kohlensäurebildnern bestehen. Übliche Hilfs- und Wirkstoffe sind Füllstoffe, Pigmente, Netzmittel, Stabilisatoren, rheologische Additive und Härter.

Die erfindungsgemäßen Verfahren werden nachfolgend anhand von Ausführungsbeispielen näher erläutert.

### Ausführungsbeispiel 1

Freigelagertes, entrindetes Fichtenholz wurde zunächst mittels eines Trommelhackers zu Hackschnitzeln zerkleinert.
Die Hackschnitzel wurden anschließend in einem Refiner (Kochtemperatur 150°C, Kochzeit 5 min) kontinuierlich zu Faserstoffen aufgemahlen. Unmittelbar nach der Faserherstellung wurden 12 % UF-Harz bezogen auf atro Fasern dem Faserstrom in der Blow-Line zugegeben. Nach der Trocknung in einem Rohrtrockner wurde ein Faservlies gebildet, das dann mit einer Kaltpresse vorverdichtet wurde. Bei einer Presstemperatur von 200°C und einer spezifischen Presszeit von 12 s/min wurde aus dem vorverdichteten Faservlies eine Platte mit einer Dicke von 5 mm und einer Dichte von 800 kg/m³ hergestellt.
Die Platte hatte eine Biegefestigkeit von 38,5 N/mm² und eine Querzugfestigkeit von 0,95 N/mm². Zur Charakterisierung der Brandeigenschaften wurde ein modifizierter Text nach DIN 4102 für Werkstoffe der Brandschutzklasse B2 angewendet. Im Unterschied zu der festgelegten Beflammungszeit von 15 s wurde die Beflammung mindestens so lange durchgeführt bis die Messmarke erreicht wurde. Bei dieser Platte war die Messmarke nach 3,6 min erreicht, nach 10 min Beflammung war die Probe weitgehend zerstört. Auch nach dem Entfernen der Zündquelle brannte die Probe weiter.

### Ausführungsbeispiel 2

Einem wie in Beispiel 1 ohne Bindemittel hergestellten Faserstoff wurde in einem Pflugscharmischer jeweils 10 % Kaliumwasserglas oder Natronwasserglas -bei einer Mischtemperatur von 35 °C zugegeben. Die wie in Beispiel 1 hergestellten Plattenwerkstoffe hatten mit Kaliumwasserglas eine Biegefestigkeit von 24,5 N/mm² und eine Querzugfestigkeit von 0,43 N/mm², und mit Natronwasserglas eine Biegefestigkeit von 16,7 N/mm² bzw. eine Querzugfestigkeit von 0,22 N/mm². Die Messmarke beim Brandtest wurde erst nach 8,3 (Kaliumwasserglas) bzw. 8,1 (Natronwasserglas) erreicht. Ohne Zündquelle brannten die Proben nicht selbstständig weiter.

### Ausführungsbeispiel 3

Eine Platte wie in Beispiel 2 jedoch mit 20 % Kaliumwasserglas zeigte eine Biegefestigkeit von 34,2 N/mm² und eine Querzugfestigkeit von 0,75 N/mm². Die Messmarke beim Brandtest wurde nach 11,5 min erreicht. Ohne Zündquelle brannte die Probe nicht selbstständig weiter.

### Ausführungsbeispiel 4

Anstelle des im Ausführungsbeispiel 1 verwendeten UF-Harzes wurde dem Faserstoff in der Blow-Line bei einer Temperatur von 125°C Kaliumwasserglas (20 % auf atro Fasern) zugegeben. Die wie in Beispiel 1 hergestellte Faserplatte hat eine Biegefestigkeit von 36 N/mm² und eine Querzugfestigkeit von 0,92 N/mm². Die Messmarke beim Brandtest wurde nach 13,3 min erreicht. Ohne Zündquelle brannte die Probe nicht selbstständig weiter.

## Patentansprüche

1. Verfahren zur Herstellung brandgeschützter dichter Formteile aus Holzfasern oder anderen lignocellulosen Faserstoffen bzw. Partikeln (nachfolgend "Faserstoffe"),
bei dem im Trockenverfahren den Faserstoffen bei einer Mischtemperatur von 30°C - 95°C auf Kalium- und/oder Natriumsilikaten basierende anorganische Stoffe (nachfolgend "Wasserglas") zugegeben werden,
und bei dem aus diesem Gemisch ein Faservlies gebildet wird, das in einer Heißpresse verdichtet wird und im Verdichtungszustand bei geschlossener Presse und einer Temperatur oberhalb 80°C erhärtet., **dadurch gekennzeichnet, dass** das Gemisch auf eine Dichte von 350kg/m³ - 1.250 kg/m³ verdichtet wird und dass zumindest ein Teil der zugegebenen Gesamtmenge an Wasserglas direkt in den die Faserstoffe aufschließenden Kochprozess oder in ein Transportorgan eines Hackschnitzel für die Herstellung der Faserstoffe zerfasernden Refiners eingespeist wird.

2. Verfahren nach Anspruch 1, **gekennzeichnet durch** eine Mischtemperatur von 40°C - 75°C.

3. Verfahren zur Herstellung brandgeschützter dichter Formteile aus Holzfasern oder anderen lignocellulosen Faserstoffen bzw. Partikeln (nachfolgend "Faserstoffe"),
bei dem unter Wasserdampfatmosphäre den Faserstoffen bei einer Mischtemperatur von 105°C - 180°C auf Kalium- und/oder Natriumsilikaten basierende anorganische Stoffe (nachfolgend "Wasserglas") zugegeben werden, und bei dem aus diesem Gemisch ein Faservlies gebildet wird, das in einer Heißpresse auf eine Dichte von 350 kg/m³ - 1.250 kg/m³ verdichtet wird und im Verdichtungszustand bei geschlossener Presse und einer Temperatur oberhalb 80°C erhärtet.

4. Verfahren nach Anspruch 3, **gekennzeichnet durch** eine Mischtemperatur von 110°C -150°C.

5. Verfahren nach einem der vorhergehenden Ansprüche, **dadurch gekennzeichnet, dass** das zu verdichtende Faservlies eine Faserfeuchte <25 % aufweist.

6. Verfahren nach einem der vorhergehenden Ansprüche, **dadurch gekennzeichnet, dass** den Faserstoffen das Wasserglas in einer Menge von 5 % - 40 %, vorzugsweise 10 % - 30 %, bezogen auf atro Faserstoffe, zugegeben wird.

7. Verfahren nach einem der vorhergehenden Ansprüche, **dadurch gekennzeichnet, dass** zumindest ein Anteil der zuzugebenden Gesamtmenge an Wasserglas den zur Herstellung der Faserstoffe bestimmten Hackschnitzeln vor und/oder bei ihrer Zerfaserung zugegeben wird.

8. Verfahren nach einem der vorhergehenden Ansprüche, **gekennzeichnet durch** die Verwendung eines Wasserglasklebstoffes.

9. Verfahren nach einem der vorhergehenden Ansprüche, **dadurch gekennzeichnet, dass** dem Wasserglas zur schnelleren Erhärtung vor oder nach seiner Zugabe zu den Faserstoffen übliche Hilfs- und Wirkstoffe zugegeben werden.

10. Verfahren nach Anspruch 9. **dadurch gekennzeichnet, dass** die Hilfs- und Wirkstoffe aus Säurebildnern bestehen.

11. Verfahren nach Anspruch 10, **dadurch gekennzeichnet, dass** als Hilfs- und Wirkstoffe Kohlensäurebildner verwendet werden.

## Claims

1. Method for the production of dense fire-resistant mouldings from wood fibres or other lignocellulosic fibrous materials or particles ("fibrous materials" below),
in which, in the dry method, inorganic materials ("water glass" below) based on potassium and/or sodium silicates are added to the fibrous materials at a mixing temperature of 30°C - 95°C, and in which a fibre mat is formed from this mixture, is compressed in a hot press and is cured in a closed press in the compressed state at a temperature above 80°C, **characterized in that** the mixture is compressed to a density of 350 kg/m³ - 1250kg/m³ and **in that** at least part of the total amount added of water glass is fed directly into the cooking process disintegrating the fibrous materials or into a transport element of a refiner defibring chips for the production of the fibrous materials.

2. Method according to Claim 1, **characterized by** a mixing temperature of 40°C - 75°C.

3. Method for the production of dense fire-resistant mouldings from wood fibres or other lignocellulosic fibrous materials or particles ("fibrous materials" below),
in which, under a water vapour atmosphere, inorganic substances ("water glass" below) based on potassium and/or sodium silicates are added to the fibrous materials at a mixing temperature of 105°C - 180°C, and in which a fibre mat is formed from this mixture, is compressed to a density of 350 kg/m³ - 1250 kg/m³ and is cured in a closed press in the compressed state at a temperature above 80°C.

4. Method according to Claim 3, **characterized by** a mixing temperature of 110°C - 150°C.

5. Method according to one of the preceding claims, **characterized in that** the fibre mat to be compressed has a fibre moisture < 25%.

6. Method according to one of the preceding claims, **characterized in that** the water glass is added to the fibrous materials in an amount of 5% - 40%, preferably 10% - 30%, based on absolutely dry fibrous materials.

7. Method according to one of the preceding claims, **characterized in that** at least a proportion of the total quantity of water glass to be added is added to the chips intended for the production of the fibrous materials before and/or after their defibring.

8. Method according to one of the preceding claims, **characterized by** the use of a water-glass adhesive.

9. Method according to one of the preceding claims, **characterized in that**, for the purpose of faster curing, conventional additives and active substances are added to the water glass before or after its addition to the fibrous materials.

10. Method according to Claim 9, **characterized in that** the auxiliary and active substances consist of acid formers.

11. Method according to Claim 10, **characterized in that** the auxiliary and active substances used are carbonic acid formers.

## Revendications

1. Procédé de fabrication de pièces formées denses en fibres de bois ou autres matières fibreuses ou particules lignocellulosiques (ci-après : matières fibreuses), dans lequel dans un procédé à sec les matières fibreuses sont additionnées, à une température de mélange de 30°C - 95°C, de composés inorganiques à base de silicates de potassium et/ou de sodium (ci-après « silicates »), et dans lequel, on obtient à partir de ce mélange une nappe de fibres qui est densifiée dans une presse chauffée et durcie lors du processus de densification avec une presse fermée, à une température supérieure à 80°C, **caractérisé en ce que** le mélange est densifié pour obtenir une densité de 350kg/m3 à 1250kg/m3 et **en ce qu'**au moins une partie de la quantité totale de silicates ajoutés est directement appliquée dans le processus de cuisson pour le pulpage de la matière fibreuse ou dans un organe de transport de fragments découpés pour la fabrication de la matière fibreuse dans des raffineurs de défibrage.

2. Procédé selon la revendication 1, **caractérisé par** une température de mélange de 40°C à 75°C.

3. Procédé de préparation de pièces formées denses en fibres de bois ou autres matières fibreuses ou particules lignocellulosiques (ci-après : matières fibreuses) dans lequel les matières fibreuses sont additionnées, sous atmosphère de vapeur d'eau et à une température de mélange de 105°C à 180°C, de composés inorganiques à base de silicates de potassium et/ou de sodium (ci-après « silicates ») et dans lequel on obtient à partir de ce mélange une nappe de fibres qui est densifiée dans une presse chauffée jusqu'à une densité de 350kg/m3 - 1250kg/m3 et est durcie lors du déroulement du processus de densification avec une presse fermée et à une température supérieure à 80°C.

4. Procédé selon la revendication 3, **caractérisé par** une température de mélange de 110°C - 150°C.

5. Procédé selon l'une des revendications précédentes, **caractérisé en ce que** la nappe de fibres à densifier présente un taux d'humidité < à 25%.

6. Procédé selon l'une des revendications précédentes **caractérisé en ce que** les silicates sont additionnés aux matières fibreuses en une quantité de 5% à 40% de préférence de 10% à 30% déterminée par rapport à la masse des matières fibreuses.

7. Procédé selon l'une des revendications précédentes, **caractérisé en ce qu'**au moins une partie de la quantité totale de silicates à ajouter est ajoutée aux fragments découpés destinés à la fabrication des matières fibreuses avant et/ou pendant leur défibrage.

8. Procédé selon l'une des revendications précédentes, **caractérisé par** l'utilisation d'une colle silicate.

9. Procédé selon l'une des revendications précédentes, **caractérisé en ce qu'**on ajoute aux silicates ou après leur ajout aux matières fibreuses des matières auxiliaires ou actives classiques pour accélérer le durcissement.

10. Procédé selon la revendication 9, **caractérisé en ce que** les matières auxiliaires ou actives sont constituées de composés formateurs d'acides.

11. Procédé selon la revendication 10 **caractérisé en ce qu'**on utilise en tant que matières auxiliaires et actives des composés formateurs d'acides carboxyliques.
